# EUROPEAN PATENT SPECIFICATION

(11) **EP 4 038 232 B1**
(45) Date of publication and mention of the grant of the patent: **25.11.2026**
(21) Application number: 19783021.9
(22) Date of filing: 04.10.2019
(51) Int. Cl.: D06F 39/02

(54) **WEIGHING CONTAINER AND A METHOD FOR USE THEREOF**
WÄGEBEHÄLTER UND VERFAHREN ZU DESSEN VERWENDUNG
RÉCIPIENT DE PESÉE ET SON PROCÉDÉ D'UTILISATION

(43) Date of publication of application: 10.08.2022
(73) Proprietor: Electrolux Professional AB (publ), 105 45 Stockholm (SE)
(72) Inventor: JOHANSSON, John, 10545 Stockholm (SE); BLOMQVIST, Mikael, 105 45 Stockholm (SE)
(74) Representative: AWA Sweden AB
(86) International application number: PCT/EP2019/076881
(87) International publication number: WO 2021/063517

(56) References cited:
- KR-A- 20050 045 258
- US-B2- 9 723 965
- "Clothes washing machines for household use - Methods for measuring the performance", IEC 60456:2010, IEC, 3, RUE DE VAREMBÉ, PO BOX 131, CH-1211 GENEVA 20, SWITZERLAND, 11 February 2010 (2010-02-11), pages 1 - 141, XP082001966

## Description

### Field of the invention

The present invention relates to a method for dosing a detergent in a reference washing machine.

The invention also relates to a weighing container for accurate dosing of detergent, wherein the container has a compartment for a detergent.

### Background

Washing machines are developed and manufactured all over the world. Although there may be preferences for different types of washing machines in different markets, there is still a universal desire to test and evaluate the performance of various washing machines in order to provide objective test results for the guidance of consumers.

In order to make the tests as objective as possible, they are performed according to certain standardized test procedures, e. g. IEC/EN 60456 in the European Union. There are corresponding standards in other geographical regions.

The machines that are to be tested may have detergent dispensers of various configurations, and the quality and efficiency thereof will contribute to the overall washing result of a particular model of washing machine. For an objective comparison, the tested machines are compared to a well-defined washing machine, a reference machine, which is run side-by-side with the tested machine, i. e. under exactly the same circumstances regarding ambient temperature, water hardness, air humidity, water conduit pressure, etc.

The reference machine is also useful for various tests, both regarding washing machines, the detergents used therein, and the material that is washed therein, e. g. textile material.

In the reference machine, the dosage of a powder detergent is very well defined, as the exact amount of powder is added to a detergent dispenser, and then flushed into the washing drum efficiently at an exact moment in the washing cycle.

However, the dosage of a liquid detergent is more problematic, since it could flow out of the detergent dispenser uncontrollably, and into the washing drum at an unknown point in time. The liquid detergent may be distributed unevenly in the wash load, thereby affecting the result in an unpredictable way. Such an uncertainty would be acceptable for a daily use of a washing machine, as the discrepancy is small, but for objective testing purposes there is a higher demand for accuracy of the dosage of detergent.

At present there are integrated dispensers for liquid detergents in many washing machines. These dispensers are of a type where the liquid detergent is mixed with a small amount of water remaining from the previous washing cycle and then flushed into the washing drum. Some water will remain in the dispenser, and it could be unclear whether all of the liquid detergent has been flushed into the washing drum. Such an uncertainty would be acceptable for a daily use of a washing machine, as the discrepancy is small, but for objective testing purposes there is a higher demand for accuracy of the dosage of detergent. Detergent dispensing arrangements for washing machines are known, for example, from KR 20160035840 A.

### Summary

It is an object of the present invention to solve, or at least mitigate, parts or all of the above-mentioned problems. To this end, the present invention provides a method for dosing a detergent as defined in claim 1 and a weighing container as defined in claim 8.

This has the advantage of enabling an exact dosage since there is no residual detergent in the detergent dispenser, and all of a liquid detergent will be introduced into the washing drum as intended.

In some embodiments of the method, the steps of weighing the empty weighing container weighing the weighing container with the detergent, and ensuring that the correct amount of detergent has been dosed are disclosed. This allows for an extremely accurate dosage of the detergent.

In further embodiments the step of taring a scale used for weighing the weighing container is disclosed. This simplifies the exact dosage of the detergent in the detachable device.

In other embodiments the step of locking the weighing container in place in the detergent dispenser forming part of the reference washing machine is disclosed. Hereby an exact position of the weighing container in the detergent dispenser is ensured. The weighing container will remain in place and will not float on top of the water flushed into the detergent dispenser. The detergent will be entirely rinsed out of the detachable device, and the dosage will be correct.

Further embodiments include snapping the weighing container into place in the detergent dispenser forming part of the reference washing machine. This provides a quick and easy way of securing the weighing container in its place in the detergent dispenser.

Some further embodiments include the step of flushing the weighing container with water at an optimal point in the washing cycle. This step ensures that all of the detergent will reach the washing drum at the intended point in time in the washing cycle.

Even further embodiments, including the step of dismounting a part of the weighing container during cleaning thereof, are disclosed. Hereby the weighing container may be completely cleaned between the test cycles, and there will be no detergent residues affecting the results of further tests.

Still further embodiments include the steps of dosing a liquid detergent in the weighing container. Even though a method may be used for detergents in powder form as well, the above-mentioned problems with dosage of liquid detergents are particularly addressed in all the disclosed embodiments.

In a second aspect of the disclosure, the method for testing a washing machine includes the method of dosing a detergent in a reference washing machine, as well as the steps of running the reference and test washing machines in a washing cycle, comparing the washing results of the reference and test washing machines, and evaluating the washing results of the test washing machine based on the comparison.

According to the invention, the weighing container described in the introduction is detachable from and securable in a detergent dispenser in a washing machine. This has the effect of providing a weighing container which is suitable for use as the weighing container when performing the disclosed methods.

In another embodiment of the third aspect the compartment for a detergent has the shape of a tray with a peripheral wall. This has the effect of providing a weighing container into which detergent is easily dosed and removed.

Further embodiments include at least one collecting tab extending from the peripheral wall of the compartment for a detergent, designed to direct a flow of water into the compartment. Hence the flow of water into the compartment is maximized, and the deposition of the intended amount of detergent into the washing drum is ensured.

In still further embodiments, the inside form of the tray allows for a good mixing and/or draining of water and detergent. Hereby it is ensured that all of the detergent reaches the washing drum as intended.

In some embodiments of the weighing container, the compartment for a detergent has a virtually flat bottom. This has the effect of a good fit in the detergent dispenser forming part of the reference washing machine, as well as enabling effective flushing of the detergent out of the compartment.

In further embodiments the compartment for a detergent is provided with grooves on its outside bottom. Hereby detergent and water that is flushed out of the weighing container may easily be drained from the detergent dispenser into the drain and further into the washing drum.

According to the invention, the weighing container has a handle that extends from the compartment for a detergent. This enables the weighing container to be easily lifted and positioned in intended positions without spilling of the detergent.

According to the invention, the container is form-fitting in the detergent dispenser forming part of the reference washing machine. Hereby, the weighing container is kept in its intended place in the detergent dispenser, and the dosage of the detergent may be performed without problems.

In a further embodiment, the weighing container is lockable in the detergent dispenser forming part of the reference washing machine. Hereby the weighing container will be kept in place with a higher level of security.

According to the invention, the weighing container connects with the detergent dispenser forming part of the reference washing machine by way of a snap fitting. Hereby the weighing container will be kept in place with an even higher level of security.

In still further embodiments, the weighing container is provided in its bottom region with at least one channel with dimensions such that the passage of water and diluted detergent is allowed, and the passage of an undiluted liquid detergent is blocked. This has the effect of ensuring that virtually all of the detergent residues, mixed with water, will be drained from the container, and all of the amount of detergent that has been dosed will actually reach the washing drum. At the same time, undiluted liquid detergent will be kept from leaking out of the weighing container prematurely.

In further embodiments, a section of an outer wall of the compartment, adjacent to the channel, is dismountable. Hereby a thorough cleaning of the channels for removal of any detergent residues will be allowed.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a perspective view of a washing machine including a detergent dispenser;
Fig. 2 is a partially sectional view in perspective of a detachable detergent container according to the disclosure, arranged in a detergent dispenser as indicated in Fig. 1;
Fig. 3 is a perspective view of the detachable detergent container included in Fig. 2;
Fig 4 is a front view of the detachable detergent container according to Fig. 2, with an enlarged section thereof;
Fig. 5 is an exploded view in perspective of the detachable detergent container according to Figs. 3 and 4; and
Fig. 6 is a flow chart of the disclosed test method.

All the figures are schematic, not necessarily to scale, and generally only show parts which are necessary in order to elucidate the embodiments, wherein other parts may be omitted.

### Detailed description of the exemplary embodiments

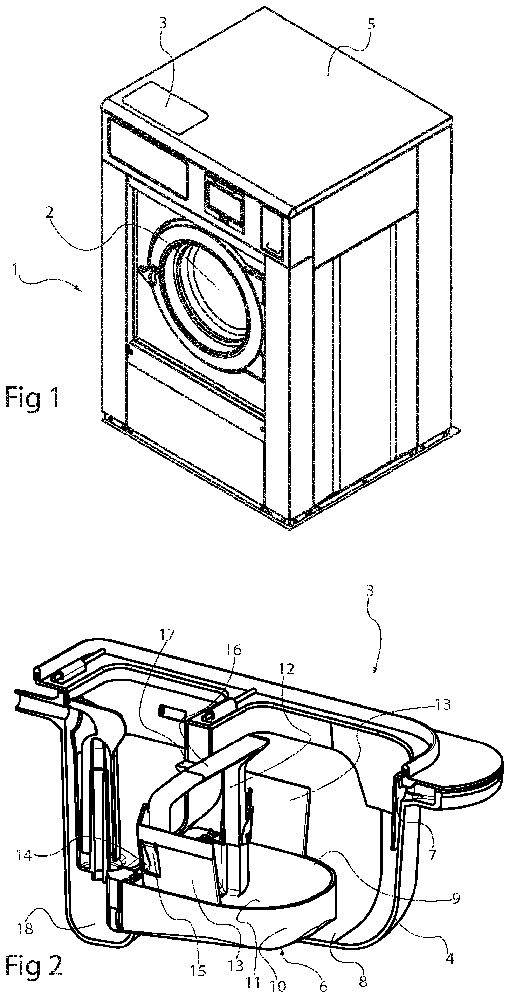

Fig. 1 illustrates a washing machine 1 of a general type which is used as a well-defined washing machine, a reference machine, used for testing of washing machines, detergents, or materials washed. The washing machine 1 has a washing drum 2 for the accommodation of the laundry goods. A detergent dispenser 3 is countersunk in the top surface 5 and arranged with access from above. In some embodiments of the washing machine 1, a detergent dispenser may be arranged e. g. in a drawer, with access to detergent compartments therein.

Fig 2. shows a perspective view of the detergent dispenser 3, where its lid has been removed and parts of its side walls 4 have been cut out of the drawing, in order to show its interior. A detachable weighing container 6 is arranged in the detergent dispenser 3 and is shown in its entirety.

The detergent dispenser 3 as such is well known and is a part of the most widely used reference machines, as mentioned above. The detergent dispenser 3 is primarily designed for use with powder detergents, and such detergents may be dosed with high accuracy into the detergent dispenser 3. Powder detergents in the detergent dispenser 3 will remain in the detergent dispenser 3 and will not be added to the washing drum 2 until water is flushed into the detergent dispenser 3, i. e. at the correct moment, e.g. an optimal point, in the washing cycle.

In order to add detergent to the washing drum 2, water is flushed into the detergent dispenser 3 along its inner side walls 4 from a surrounding water duct 7. The water will flow along the side walls 4 and the bottom 8 of the detergent dispenser and then into a drain 18 of the detergent dispenser 3, thereby bringing the detergent into the washing drum 2.

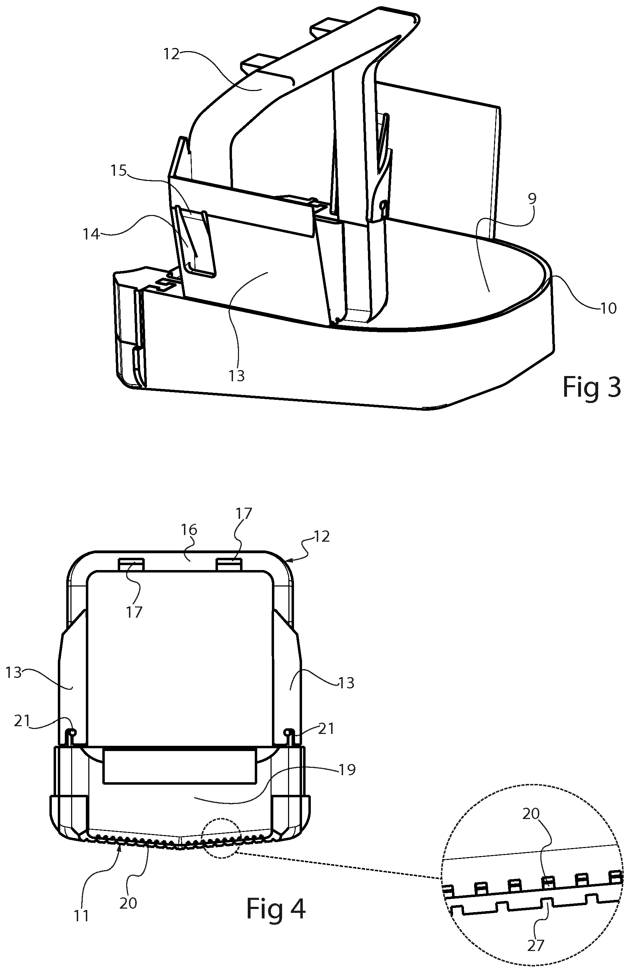

The detachable weighing container 6, which is shown in isolation in Fig. 3, includes a compartment 9 for a detergent. The compartment 9 has a peripheral wall 10 and a slightly inclined, almost flat bottom 11. The outer shape of the compartment 9 is formfitting with the inside of the detergent dispenser 3. The size of the compartment 9 is sufficient for holding an amount of liquid detergent, corresponding to a load of laundry. By the use of a weighing container 6, the use of a liquid detergent in the detergent dispenser 3 is enabled with an exact dosage and exact timing of the delivery into the washing drum 2.

The inside form of the compartment 9, which has the general shape of a tray, allows for good mixing and/or draining of water and detergent. Features facilitating good mixing and/or draining are e. g. rounded corners in the rear part, and/or the bottom 11 inclined towards the front, i. e. in the direction of the drain 18 of the detergent dispenser 3, when the weighing container 6 is arranged therein. Also, the bottom 11 of the compartment 9, or tray, is preferably inclined towards a center line.

On either side of the compartment 9, as seen in the figures, there is at least one tab 13 for directing the flow of water from the inner side walls 4 of the detergent dispenser 3 into the container 9. The tabs 13 are articulated or manufactured in a flexible material, or both, in order to abut against the inner side walls 4 of the detergent dispenser 3. The tabs 13 may be arranged in other positions on the upper edge of the peripheral wall 10.

The detachable weighing container 6 further includes a handle 12 for conveniently lifting the container and placing it into the detergent dispenser 3. The handle 12 extends in an approximately U-shaped arc, the ends of which are joined to the peripheral wall 10 at either side of the compartment 9. The positioning of the handle 12 is such that the compartment 9 will remain in an approximately horizontal, well balanced position when held by the handle 12, even when a dose of detergent has been supplied therein. The risk of spilling the detergent when moving the weighing container 6 is hereby minimized. Many other shapes and placements of the handle not forming part of the present invention are foreseen.

The tabs 13 are, in some embodiments, adapted to accommodate the handle 12. In the embodiment of Fig. 2 and Fig 3., there are recesses 14 with elastic elements 15, which abut against the handle 12, in order to bias the tabs 13 towards the inner walls 4 of the detergent dispenser 3.

On the upper section 16 of the handle 12, there is provided at least one snap fastening element 17, for securing or locking the detachable weighing container 6 in the detergent dispenser 3. The snap fastening elements 17 extend under a section of the inner walls 4, in order to keep the detachable weighing container 6 in place even when water is flushed into the detergent dispenser 3.

In Fig. 4, the detachable weighing container 6 is shown from the front, i. e. the side which is closest to the drain 18 of the detergent dispenser 3, when the container 6 is mounted therein. At the bottom region of the front wall 19, there are channels 20, which extend from the inside of the compartment 9 to the outside, i. e. near the drain 18, when the detachable weighing container 6 is mounted in the detergent dispenser 3. The channels 20 are shown in detail in the enlarged section of Fig. 4. Also, it is visible in the enlargement that the outside bottom of the compartment 9 is provided with grooves 27, to facilitate the flow of water and detergent towards the drain 18 of the detergent dispenser 3. In particular, the grooves 27 are useful for draining the water and detergent that have not been flushed out of the compartment 9 directly into the drain 18, but rather on the opposite side of the compartment 9, thereby having to pass the compartment 9 on their way towards the drain 18.

The length and transverse dimensions of the channels 20 are chosen such that a liquid with a low viscosity, such as water (0.89 mPa·s at room temperature), may pass through the channels 20, whereas liquids with a significantly higher viscosity, i. e. above 1.0 mPa·s at room temperature, such as an undiluted liquid detergent, are blocked. Hereby the undiluted liquid detergent will remain in the compartment 9 until the water flushes into the detergent dispenser 3 at the proper moment in the washing cycle, whereas the last residues of detergent, which have been diluted with water to a high extent, will be able to pass through the channels 20 and reach the drain 18. Hence all of the liquid detergent will reach the washing drum 2 as intended.

In Fig. 4 articulations 21 between the tabs 13 and the peripheral wall 10 of the compartment 9 are also visible.

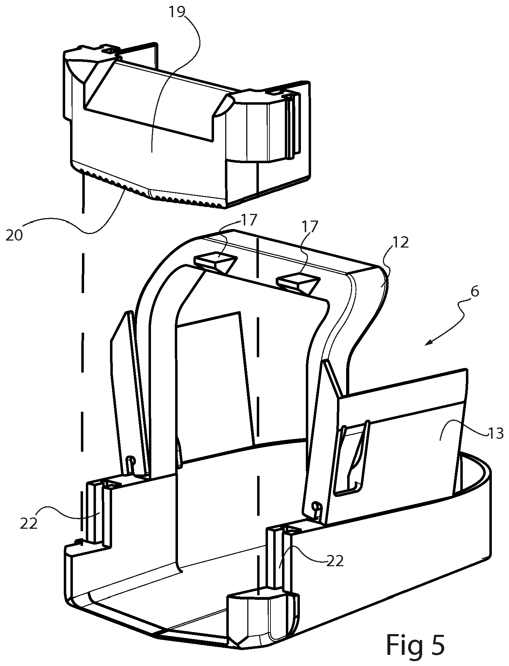

Fig. 5 shows an exploded view of the detachable weighing container 6, where the front wall 19 is dismountable by means of undercut sliding positioning 22. The channels 20 at the bottom part of the front wall 19 are accessible for cleaning, so that any remaining residues of detergent may be removed after the detergent has been flushed out of the weighing container 6, e. g. after one or more washing cycles.

A method for using the detachable weighing container 6 will now be described. Initially the detachable weighing container 6 will be arranged outside of the detergent dispenser 3 of the washing machine 1, which is a machine suitable for testing purposes and comparison, the reference machine, as mentioned above.

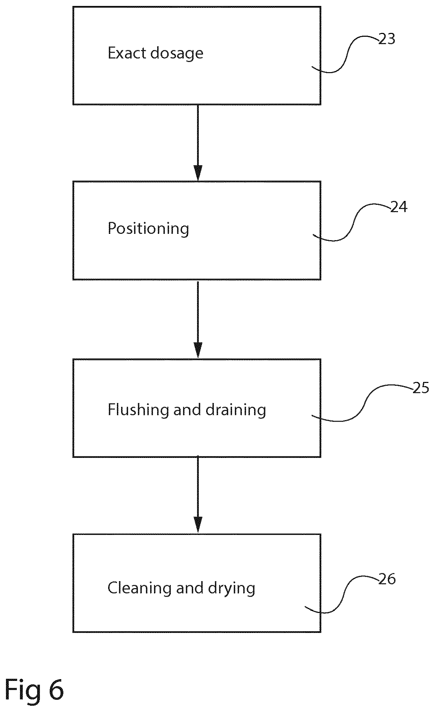

The weighing container 6 is placed on a scale. Its weight is either noted, or the scale is tared, so that the weight of the weighing container 6 is deducted automatically from the total weight. An exact amount, by weight, of a detergent, typically a liquid detergent, is poured into the compartment 9. In the absence of a taring function on the scale, the weight of the weighing container container 6 needs to be deducted from the total weight of the container 6 and the detergent, so that the exact weight of the detergent is determined. Measuring the exact dosage of detergent is the first step 23 in the flow chart in Fig. 6.

The weighing container 6 is then lifted from the scale by the handle 12 and positioned into the detergent dispenser 3 in the washing machine 1. Since the detachable weighing container 6 is formfitting in the detergent dispenser 3, it will easily fit into the correct position of use. In order to lock the weighing container 6 in its position, so that it will remain in position during the flushing of water into the detergent dispenser 3, the snap fastening elements 17 are snapped into cooperation with the inside of the detergent dispenser 3. Positioning and securing the detachable weighing container 6 in the dispenser is the second step 24 in the flowchart of Fig. 6.

As the next step of the method, the washing cycle is started with the detachable weighing container 6 in its place in the detergent dispenser 3. The detergent is flushed out of the detergent compartment 9 by the water that is led into the compartment 9 by the tabs 13. Mainly the compartment 9 overflows with water and the detergent, mixed with water, will flow over the upper edges of the peripheral wall 10.

When the flow of water into the compartment 9 has been stopped, the amount of water that remains in the compartment 9 will no longer flow over the upper edges of the peripheral wall 10. The remaining liquid in the compartment 9 is mainly water, with minute amounts of detergent dissolved therein. The viscosity thereof is virtually the same as the viscosity of completely pure water. The remains drain out of the compartment 9 via the channels 20 in the bottom of the front wall 19, and the grooves 27 in the outside bottom of the compartment 9. All of the detergent dosed in the detachable weighing container 6 has been introduced into the washing drum at the intended step of the washing cycle. The flushing and draining of the compartment 9 is shown as the third step 25 in the flowchart of Fig. 6.

When the washing cycle is complete, the detachable weighing container 6 may be removed, cleaned and dried in anticipation of its next use. In order to make sure that no water or detergent residue remain in the channels 20, the front wall 19 of the compartment 9 is removed to allow for complete rinsing and drying. Cleaning and drying the detachable weighing container 6 is shown as the fourth step 26 in the flowchart of Fig. 6.

In some instances of testing, the reference machine is run side by side with a machine that is to be tested in some particular respect. The machine that is to be tested could be run with or without a detergent, and, if run with a detergent, it could be dosed automatically or manually according to the specifications of the test machine.

## Claims

1. A method for dosing a detergent in a reference washing machine (1), **characterized in that** the method comprises weighing an empty weighing container (6), dosing the detergent in the weighing container (6), weighing the weighing container (6) with the detergent, ensuring that the correct amount of detergent has been dosed, securing the weighing container (6) in the detergent dispenser (3) forming part of the reference washing machine (1), and running the reference washing machine in a washing cycle, and wherein, during the step of running the reference washing machine (1) the weighing container (6) remains in the detergent dispenser (3).

2. A method according to claim 1, including the step of taring a scale used for weighing the weighing container (6).

3. A method according to any of claims 1 to 2, including the step of locking the weighing container (6) in place in the detergent dispenser (3) forming part of the reference washing machine.

4. A method according to claim 3, including snapping the weighing container (6) into place in the detergent dispenser (3) forming part of the reference washing machine.

5. A method according to any of claims 1 to 4, including the step of flushing the weighing container (6) with water at an optimal point in the washing cycle.

6. A method according to any of claims 1 to 5, including the step of dismounting a part (19) of the weighing container (6) during cleaning thereof.

7. A method according to any of claims 1 to 6, including the step of dosing a liquid detergent in the weighing container (6).

8. A weighing container (6) for accurate dosing of detergent, wherein the container (6) has a compartment (9) for a detergent, wherein the container (6) is detachable from and securable in a detergent dispenser (3) forming part of a reference washing machine (1) and the container (6) is form-fitting in the detergent dispenser (3), **characterised in that** a handle (12) extends from the compartment (9) for a detergent, wherein the handle (12) extends in an approximately U-shaped arc, the ends of which are joined to a peripheral wall (10) at either side of the compartment (9), wherein the positioning of the handle (12) is such that the compartment (9) will remain in an approximately horizontal, well-balanced position when held by the handle, and wherein the handle (12) comprises at least one snap fastening element (17) for securing or locking the container (6) in the detergent dispenser (3).

9. A weighing container (6) according to claim 8, wherein the compartment (9) for a detergent has the shape of a tray with a peripheral wall (10).

10. A weighing container (6) according to claim 9, wherein at least one collecting tab (13) extending from the peripheral wall (10) of the compartment (9) for a detergent is designed to direct a flow of water into the compartment (9).

11. A weighing container (6) according to any of claims 8 to 10, wherein the compartment (9) for a detergent has a virtually flat bottom (11).

12. A weighing container (6) according to any of claims 8 to 11, wherein the compartment (9) for a detergent is provided with grooves (27) on its outside bottom.

13. A weighing container (6) according to any of claims 8 to 12, wherein the weighing container (6) is provided in its bottom region with at least one channel (20) with dimensions such that the passage of water and diluted detergent is allowed, and the passage of an undiluted liquid detergent is blocked.

14. A weighing container (6) according to claim 13, wherein a section of an outer wall of the compartment (9), adjacent to the channel (20), is dismountable.

## Patentansprüche

1. Verfahren zum Dosieren eines Waschmittels in einer Referenzwaschmaschine (1), **dadurch gekennzeichnet, dass** das Verfahren Wägen eines leeren Wägebehälters (6), Dosieren des Waschmittels in den Wägebehälter (6), Wägen des Wägebehälters (6) mit dem Waschmittel, Sicherstellen, dass die korrekte Menge an Waschmittel dosiert worden ist, Befestigen des Wägebehälters (6) in dem Waschmittelspender (3), der einen Teil der Referenzwaschmaschine (1) bildet, und Laufenlassen der Referenzwaschmaschine in einem Waschzyklus umfasst, und wobei während des Schritts des Laufenlassens der Referenzwaschmaschine (1) der Wägebehälter (6) in dem Waschmittelspender (3) verbleibt.

2. Verfahren nach Anspruch 1, beinhaltend den Schritt des Tarierens einer zum Wägen des Wägebehälters (6) verwendeten Waage.

3. Verfahren nach einem der Ansprüche 1 bis 2, beinhaltend den Schritt des Verriegelns des Wägebehälters (6) an Ort und Stelle in dem Waschmittelspender (3), der einen Teil der Referenzwaschmaschine bildet.

4. Verfahren nach Anspruch 3, beinhaltend Einrasten des Wägebehälters (6) an Ort und Stelle in dem Waschmittelspender (3), der einen Teil der Referenzwaschmaschine bildet.

5. Verfahren nach einem der Ansprüche 1 bis 4, beinhaltend den Schritt des Spülens des Wägebehälters (6) mit Wasser an einem optimalen Punkt in dem Waschzyklus.

6. Verfahren nach einem der Ansprüche 1 bis 5, beinhaltend den Schritt des Demontierens eines Teils (19) des Wägebehälters (6) während des Reinigens davon.

7. Verfahren nach einem der Ansprüche 1 bis 6, beinhaltend den Schritt des Dosierens eines Flüssigwaschmittels in den Wägebehälter (6).

8. Wägebehälter (6) zum genauen Dosieren von Waschmittel, wobei der Behälter (6) ein Fach (9) für ein Waschmittel aufweist, wobei der Behälter (6) von einem Waschmittelspender (3), der einen Teil einer Referenzwaschmaschine (1) bildet, abnehmbar und in diesem befestigbar ist und der Behälter (6) in dem Waschmittelspender (3) formschlüssig ist, **dadurch gekennzeichnet, dass** sich ein Griff (12) von dem Fach (9) für ein Waschmittel erstreckt, wobei sich der Griff (12) in einem annähernd U-förmigen Bogen erstreckt, dessen Enden mit einer Umfangswand (10) auf beiden Seiten des Fachs (9) verbunden sind, wobei die Positionierung des Griffs (12) derart ist, dass das Fach (9) in einer annähernd waagerechten, ausbalancierten Position verbleibt, wenn es an dem Griff gehalten wird, und wobei der Griff (12) mindestens ein Schnappbefestigungselement (17) zum Befestigen oder Verriegeln des Behälters (6) in dem Waschmittelspender (3) umfasst.

9. Wägebehälter (6) nach Anspruch 8, wobei das Fach (9) für ein Waschmittel die Form einer Schale mit einer Umfangswand (10) aufweist.

10. Wägebehälter (6) nach Anspruch 9, wobei mindestens eine sich von der Umfangswand (10) des Fachs (9) für ein Waschmittel erstreckende Auffanglasche (13) dazu ausgelegt ist, eine Wasserströmung in das Fach (9) zu leiten.

11. Wägebehälter (6) nach einem der Ansprüche 8 bis 10, wobei das Fach (9) für ein Waschmittel einen im Wesentlichen flachen Boden (11) aufweist.

12. Wägebehälter (6) nach einem der Ansprüche 8 bis 11, wobei das Fach (9) für ein Waschmittel mit Nuten (27) auf seinem Außenboden versehen ist.

13. Wägebehälter (6) nach einem der Ansprüche 8 bis 12, wobei der Wägebehälter (6) in seinem Bodenbereich mit mindestens einem Kanal (20) mit Abmessungen versehen ist, die derart sind, dass der Durchlass von Wasser und verdünntem Waschmittel ermöglicht und der Durchlass eines unverdünnten Flüssigwaschmittels blockiert ist.

14. Wägebehälter (6) nach Anspruch 13, wobei ein Abschnitt einer Außenwand des Fachs (9), angrenzend an den Kanal (20), demontierbar ist.

## Revendications

1. Procédé de dosage d'un détergent dans une machine à laver de référence (1), **caractérisé en ce que** le procédé consiste à peser un récipient de pesée (6) vide, à doser le détergent dans le récipient de pesée (6), à peser le récipient de pesée (6) avec le détergent, à vérifier que la quantité correcte de détergent a été dosée, à fixer le récipient de pesée (6) dans le distributeur de détergent (3) faisant partie de la machine à laver de référence (1) et à faire fonctionner la machine à laver de référence dans un cycle de lavage, et dans lequel, pendant l'étape de fonctionnement de la machine à laver de référence (1), le récipient de pesée (6) reste dans le distributeur de détergent (3).

2. Procédé selon la revendication 1, incluant l'étape de tarage d'une balance utilisée pour peser le récipient de pesée (6).

3. Procédé selon l'une quelconque des revendications 1 à 2, incluant l'étape de verrouillage du récipient de pesée (6) en place dans le distributeur de détergent (3) faisant partie de la machine à laver de référence.

4. Procédé selon la revendication 3, incluant l'emboîtement du récipient de pesée (6) en place dans le distributeur de détergent (3) faisant partie de la machine à laver de référence.

5. Procédé selon l'une quelconque des revendications 1 à 4, incluant l'étape de rinçage du récipient de pesée (6) avec de l'eau à un instant optimal dans le cycle de lavage.

6. Procédé selon l'une quelconque des revendications 1 à 5, incluant l'étape de démontage d'une partie (19) du récipient de pesée (6) pendant son nettoyage.

7. Procédé selon l'une quelconque des revendications 1 à 6, incluant l'étape de dosage d'un détergent liquide dans le récipient de pesée (6).

8. Récipient de pesée (6) pour le dosage précis de détergent, le récipient (6) comprenant un compartiment (9) pour un détergent, le récipient (6) pouvant être fixé dans un distributeur de détergent (3) faisant partie d'une machine à laver de référence (1), et détaché de celui-ci, et le récipient (6) s'adaptant parfaitement au distributeur de détergent (3), **caractérisé en ce qu'**une poignée (12) s'étend à partir du compartiment (9) pour un détergent, dans lequel la poignée (12) s'étend approximativement en forme d'un arc en U dont les extrémités sont fixées à une paroi périphérique (10) de chaque côté du compartiment (9), dans lequel la position de la poignée (12) est telle que le compartiment (9) reste dans une position approximativement horizontale et bien équilibrée lorsqu'il est maintenu par la poignée, et dans lequel la poignée (12) comprend au moins un élément de fixation par emboîtement (17) permettant de fixer ou de verrouiller le récipient (6) dans le distributeur de détergent (3).

9. Récipient de pesée (6) selon la revendication 8, dans lequel le compartiment (9) pour un détergent a la forme d'un plateau avec une paroi périphérique (10).

10. Récipient de pesée (6) selon la revendication 9, dans lequel au moins une languette de collecte (13) s'étendant à partir de la paroi périphérique (10) du compartiment (9) pour un détergent est conçue pour diriger un flux d'eau à l'intérieur du compartiment (9).

11. Récipient de pesée (6) selon l'une quelconque des revendications 8 à 10, dans lequel le compartiment (9) pour un détergent a un fond pratiquement plat (11).

12. Récipient de pesée (6) selon l'une quelconque des revendications 8 à 11, dans lequel le compartiment (9) pour un détergent est pourvu de rainures (27) sur son fond extérieur.

13. Récipient de pesée (6) selon l'une quelconque des revendications 8 à 12, dans lequel le récipient de pesée (6) est pourvu, dans sa région inférieure, d'au moins un canal (20) dont les dimensions permettent le passage de l'eau et du détergent dilué, et bloquent le passage d'un détergent liquide non dilué.

14. Récipient de pesée (6) selon la revendication 13, dans lequel une section d'une paroi extérieure du compartiment (9), adjacente au canal (20), est démontable.
